(19) Europäisches Patentamt / European Patent Office / Office européen des brevets

(11) **EP 4 552 775 A1**

(12) **EUROPEAN PATENT APPLICATION**

(43) Date of publication:
**14.05.2025 Bulletin 2025/20**

(21) Application number: **24207130.6**

(22) Date of filing: **17.10.2024**

(51) International Patent Classification (IPC):
**B23C 5/10** $^{(2006.01)}$

(52) Cooperative Patent Classification (CPC):
**B23C 5/10**; B23C 2200/293; B23C 2210/04;
B23C 2222/04; B23C 2250/16

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.11.2023 US 202318388891**

(71) Applicant: **KENNAMETAL INC.
Latrobe, PA 15650 (US)**

(72) Inventors:
• **GEORGE, Stephen M.
Latrobe, PA, 15650 (US)**
• **DAVIS, Danny R.
Latrobe, PA, 15650 (US)**

(74) Representative: **Prinz & Partner mbB
Patent- und Rechtsanwälte
Rundfunkplatz 2
80335 München (DE)**

(54) **END MILL WITH CONDITIONED CUTTING EDGE AND METHOD OF MAKING SAME**

(57) A rotary cutting tool (10) includes a shank portion (12) and a cutting portion (14) extending from the shank portion (12) to a cutting tip (16). The cutting portion (14) has a plurality of blades (18) separated by flutes (20). Each of the blades (18) includes a relief surface (22) and a radial cutting edge (24) formed at an intersection between a respective flute (20) and the relief surface (22). The relief surface (22) includes an inner eccentric relief (30) immediately adjacent the radial cutting edge (24) and an outer eccentric relief (32) immediately adjacent the inner eccentric relief (30). The inner eccentric relief (30) is formed with an inner eccentric relief angle, β, of less than about 5 degrees, and wherein the outer eccentric relief (32) is formed with an outer eccentric relief angle, $\beta$, of between about 5 degrees and about 15 degrees. A method of making the rotary cutting tool (10) is also described.

*FIG. 1*

EP 4 552 775 A1

## EP 4 552 775 A1

**Description**

FIELD OF THE INVENTION

The invention pertains to a rotary cutting tool. More particularly, the invention relates to a solid end mill having a relief surface comprising an inner eccentric relief immediately adjacent a radial cutting edge and an outer eccentric relief immediately adjacent the inner eccentric relief. The inner eccentric relief is formed with a relief angle of less than about 5 degrees and the outer eccentric relief is formed with a relief angle of between about 5 degrees and about 15 degrees.

BACKGROUND OF THE INVENTION

At its most basic, milling is the meeting of a rotating tool with a clamped and stationary workpiece, as opposed to turning where the tool is stationary and the work material rotates. Actually, the workpiece has feed motion imparted from the machine tool. The meeting of the rotary motion of the cutter and the cutting edge of the tools produces fluctuating cutting forces: vibration, heat, and, if all goes well, chips.

Milling machines may have either vertical or horizontal spindle orientation, and typically, face milling cuts flat surfaces, but multi-axis computer numerical control (CNC) machines make it possible to include three-dimensional movements. That said, there are four basic categories of milling: face milling, periphery milling, slot milling, and specialty applications.

Face milling is used for creating a flat surface (face) on the workpiece. The cutting plane is usually perpendicular to the axis of rotation of the cutter. Surface finish requirements are an important input to determine the best tool type.

Periphery milling generates a primary surface parallel to the spindle rotation. A secondary surface is sometimes produced by the axial portion of the cutter while periphery milling. The cutting plane is usually parallel to the axis of rotation.

Slot milling is used for producing a slot or channel in the workpiece. There are two primary types of slot milling cutters: disk mills and end mills. Disk mills can be high-speed steel, brazed carbide, and indexable-insert-based. They are typically used in operations perpendicular to the spindle rotation.

End mills used for slot-milling operations are similar to the tools used in periphery milling. The slot being generated is parallel to the spindle rotation.

When end mills are used to machine non-ferrous materials, such as aluminum and the like, it is often desired to have as sharp of a cutting edge as possible without chips or jagged edges. It is also desirable to improve sliding friction to reduce the cutting forces and reduce the formation of a built-up edge. One major issue with the milling of non-ferrous materials, such as aluminum and the like, is chatter at the typically high spindle rotational speeds. Combining the natural pendulum motion of the tool during the machining process with very sharp edges results in the tool digging into the workpiece as the motion adds to the depth of cut in the feed direction. This digging action increases the chip thickness, spiking the forces higher and further increasing the chatter. This can result in poor machined surface finish, reduced tool life, part tolerance issues, and potentially spindle bearing damage to the machine.

SUMMARY OF THE INVENTION

The problem of designing an end mill with sharp cutting edges that are capable of machining non-ferrous materials with greatly reduced chatter is solved by providing an end mill having a cutting edge with an inner eccentric relief immediately adjacent the flute and an outer eccentric relief with a relatively larger relief angle immediately adjacent the inner eccentric relief.

In one aspect of the invention, a rotary cutting tool comprises a shank portion and a cutting portion extending from the shank portion to a cutting tip. The cutting portion has a plurality of blades separated by flutes. Each of the blades includes a relief surface and a radial cutting edge formed at an intersection between a respective flute and the relief surface. The relief surface comprises an inner eccentric relief immediately adjacent the radial cutting edge and an outer eccentric relief immediately adjacent the inner eccentric relief.

In another aspect of the invention, a rotary cutting tool with a longitudinal axis comprises a shank portion and a cutting portion extending from the shank portion to a cutting tip. The cutting portion has a plurality of blades separated by flutes. Each of the blades includes a relief surface and a radial cutting edge formed at an intersection between a respective flute and the relief surface. The relief surface comprises an inner eccentric relief immediately adjacent the radial cutting edge and an outer eccentric relief immediately adjacent the inner eccentric relief. The inner eccentric relief is formed with an inner eccentric relief angle, $\beta$, of less than about 5 degrees. The outer eccentric relief is formed with an outer eccentric relief angle, $\beta$, of between about 5 degrees and about 15 degrees. The inner eccentric relief is formed with a surface finish of less than 0.15 microns Ra.

In yet another aspect of the invention, a method of making a rotary cutting tool comprising a shank portion and a cutting portion. The cutting portion has a plurality of blades separated by flutes. Each of the blades includes a relief surface and a radial cutting edge formed at an intersection between a respective flute and the relief surface. The relief surface comprises an inner eccentric relief immediately adjacent the radial cutting edge and an outer eccentric relief immediately adjacent the inner eccentric relief, the method comprising:

grinding a cylindrical blank to form a flute and a radial cutting edge by using a grinding wheel;
grinding an outer relief surface behind and adjacent the radial cutting edge having an outer eccentric relief angle, $\beta$, of between about 5 degrees and about 15 degrees by using a grinding wheel; and
grinding and polishing a portion of the outer eccentric relief surface immediately adjacent the radial cutting edge to form an inner relief surface having an inner eccentric relief angle, $\beta$, of less than about 5 degrees by using a fine grit grinding wheel.

BRIEF DESCRIPTION OF THE DRAWINGS

While various embodiments of the invention are illustrated, the particular embodiments shown should not be construed to limit the claims. It is anticipated that various changes and modifications may be made without departing from the scope of this invention.

FIG. 1 is a perspective view of a rotary cutting tool with an improved relief configuration in accordance with an embodiment of the invention;
FIG. 2 is a cross-sectional view of the rotary cutting tool taken along line 2-2 of FIG. 1
FIG. 3 is an enlarged side view of the inner eccentric relief and the outer eccentric relief of the rotary cutting tool of FIG. 1; and
FIG. 4 is an enlarged cross-sectional view of the rotary cutting tool of FIG. 1 showing the inner eccentric relief and the outer eccentric relief of the rotary cutting tool.

DETAILED DESCRIPTION OF THE INVENTION

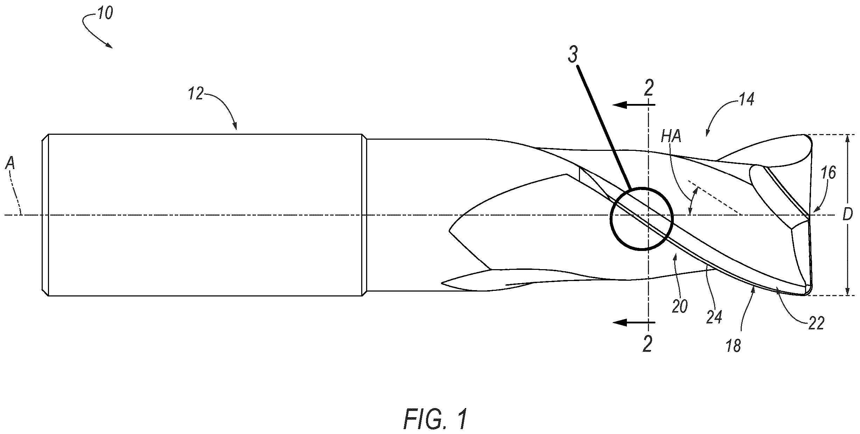

Referring now to FIGS. 1-4, a rotary cutting tool 10 is provided that includes a shank portion 12, a cutting portion 14 having a cutting tip 16, and a central, longitudinal axis, A. In the illustrated embodiment, the rotary cutting tool 10 comprises a solid end mill having a cutting diameter, D (FIG. 1). The overall shape of the cutting portion 14 may be, but is not limited to, a cylindrical shape or a frusto-conical shape. The cutting portion 14 includes a plurality of blades 18 separated by flutes 20 extending the length of the cutting portion 14. Each of the blades 18 has a relief surface, shown generally at 22, and a radial (i.e., side) cutting edge 24 formed at the intersection between the flute 20 and the relief surface 22.

Approximating language, as used herein throughout the specification and claims, may be applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

Throughout the text and the claims, use of the word "about" in relation to a range of values (e.g., "about 22 to 35 wt %") is intended to modify both the high and low values recited, and reflects the penumbra of variation associated with measurement, significant figures, and interchangeability, all as understood by a person having ordinary skill in the art to which this invention pertains.

For purposes of this specification (other than in the operating examples), unless otherwise indicated, all numbers expressing quantities and ranges of ingredients, process conditions, etc are to be understood as modified in all instances by the term "about". Accordingly, unless indicated to the contrary, the numerical parameters set forth in this specification and attached claims are approximations that can vary depending upon the desired results sought to be obtained by the present invention. At the very least, and not as an attempt to limit the application of the doctrine of equivalents to the scope of the claims, each numerical parameter should at least be construed in light of the number of reported significant digits and by applying ordinary rounding techniques. Further, as used in this specification and the appended claims, the singular forms "a", "an" and "the" are intended to include plural referents, unless expressly and unequivocally limited to one referent.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements including that found in the measuring instrument. Also, it should be understood that any numerical range recited herein is intended to include all sub-ranges subsumed therein. For example, a range of "1 to 10" is intended to include all sub-ranges between and including the recited minimum value of 1 and the recited maximum value of 10, i.e., a range having a minimum value equal to or greater than 1 and a maximum value of equal to or less than 10. Because the disclosed numerical ranges are continuous, they include every value between the minimum and maximum values. Unless expressly indicated otherwise, the various numerical ranges specified in this application are approximations.

In the following specification and the claims, a number of terms are referenced that have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

As used herein, an eccentric relief is defined as a slightly convex surface behind the cutting edge. When a continuous eccentric relief is provided, the relief angle must be measured by means of an indicator drop per angle of rotation using the following formula:

$$\beta = ATAN\frac{360\lambda}{\pi A\theta} \qquad (1)$$

where

$\beta$ is the radial relief angle,
$\lambda$ is the indicator drop,
$\theta$ is the rotation angle, and
A is the cutting diameter.

As used herein, a "fine grit" grinding wheel is a grinding wheel having a D20 grit size (i.e., diamond grit size) or finer.

As used herein, surface finish Ra is a common unit of measurement of surface roughness. It is an average roughness between a roughness profile and the mean line. Ra is the calculated average between peaks and valleys on a surface. The lower the Ra value, the less variation between the peaks and valleys on a surface, making the surface smoother.

In the illustrated embodiment, the end mill 10 has a total of two blades 18 and flutes 20. However, it will be appreciated that the invention is not limited by the number of blades and flutes, and that the invention can be practiced with a fewer or a greater number of blades and flutes. For example, the invention can be practiced with three blades and flutes, four blades and flutes, five blades and flutes, six blades and flutes, seven blades and flutes, eight blades and flutes, and the like.

The blades 18 and flutes 20 of the cutting portion 14 extend helically within the cutting portion 14 at a helix angle, HA, of between about 25 and about 50 degrees with respect to the central, longitudinal axis, A. In another embodiment, the blades 18 and flutes 20 are "straight flutes" that extend parallel to the longitudinal axis, A. In the illustrated embodiment, the blades 18 and flutes 20 of the cutting portion 14 extend helically within the cutting portion 14 at a helix angle, HA, of about 35 degrees.

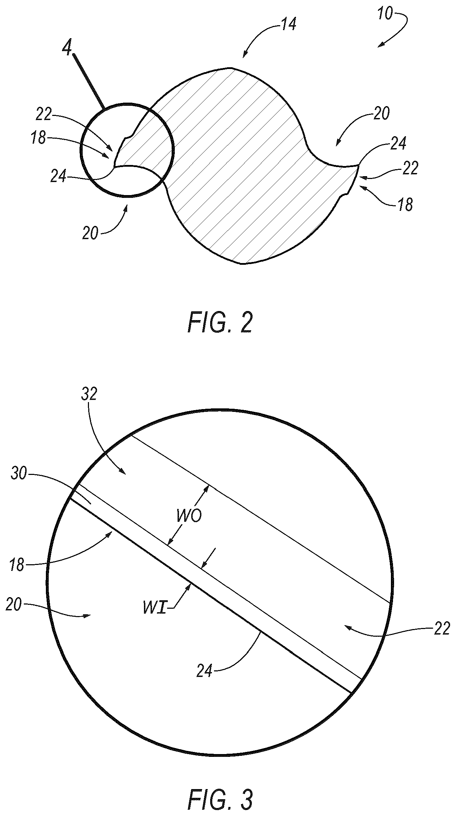

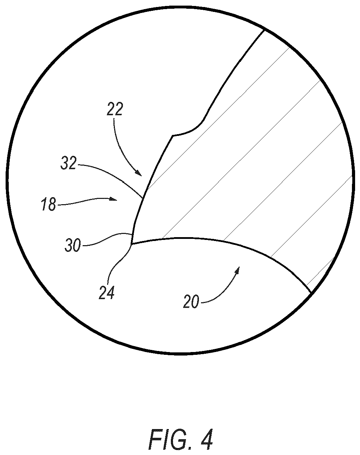

Referring now to FIGS. 3 and 4, one aspect of the invention is that the relief surface 22 comprises an inner eccentric relief 30 and an outer eccentric relief 32. The inner eccentric relief 30 is immediately adjacent the cutting edge 24 and the outer eccentric relief 32 is immediately adjacent the inner eccentric relief 30. In other words, the inner eccentric relief 30 is disposed between the cutting edge 24 and the outer eccentric relief 32.

According to an aspect, the inner eccentric relief 30 has a relatively low inner eccentric relief angle, $\beta$, of less than about 5 degrees, and the outer eccentric relief 32 has a relatively larger outer eccentric relief angle, $\beta$, of between about 5 degrees and about 15 degrees. In addition, the inner eccentric relief 30 has very narrow width, WI, of less than about 0.25 mm, and the outer eccentric relief 32 has a relatively much larger width, WO, of at least twice the width, WI, of the inner eccentric relief 30. In the illustrated embodiment, the width, WO of the outer eccentric relief 32 is about 4 times larger than the width, WI, of the inner eccentric relief 30.

The method of making the end mill 10 of the invention with the relief surface 22 having the inner and outer eccentric reliefs 30, 32 will now be described.

First, a cylindrical blank is ground to form the flute 20 and the corresponding radial cutting edge 24 by using a grinding wheel. Next, the outer eccentric relief 32 is formed by grinding behind (i.e., trailing) and adjacent the cutting edge 24 by using a grinding wheel. The outer eccentric relief 32 is formed having an outer eccentric relief angle, $\beta$, of between about 5 degrees and about 15 degrees. Then, the inner eccentric relief 30 is formed by grinding and polishing a portion of the outer eccentric relief 32 immediately adjacent the cutting edge 24 by using a fine grit grinding wheel. The inner eccentric relief 30 has a width, WI, of less than about 0.25 mm, an inner eccentric relief angle, $\beta$, of less than about 5 degrees and a surface finish less than about 0.15 microns Ra.

It has been found that the inner and outer eccentric reliefs 30, 32 described above create a high-quality, conditioned cutting edge 24 with very low damage. This is because both inner and outer eccentric reliefs 30, 32 are ground and the inner eccentric relief 30 is polished. In addition, the design of a relatively low inner relief angle, $\beta$, for the inner eccentric relief 30 still provides some process damping in machining non-ferrous materials, such as aluminum, and the like.

The patents and publications referred to herein are hereby incorporated by reference.

Having described presently preferred embodiments the invention may be otherwise embodied within the scope of the appended claims.

PARTS LIST

10      rotary cutting tool
12      shank portion
14      cutting portion
16      cutting tip
18      blade
20      flute
22      relief surface
24      cutting edge
30      inner eccentric relief
32      outer eccentric relief

A       central, longitudinal axis
HA      helix angle
WI      width (inner eccentric relief)
WO      width (outer eccentric relief)

**Claims**

1.  A rotary cutting tool (10), comprising:

    a shank portion (12); and
    a cutting portion (14) extending from the shank portion (12) to a cutting tip (16), the cutting portion (14) having a plurality of blades (18) separated by flutes (20), each of the blades (18) including a relief surface (22) and a radial cutting edge (24) formed at an intersection between a respective flute (20) and the relief surface (22),

    wherein the relief surface (22) comprises an inner eccentric relief (30) immediately adjacent the radial cutting edge (24) and an outer eccentric relief (32) immediately adjacent the inner eccentric relief (30).

2.  The rotary cutting tool (10) according to Claim 1, wherein the inner eccentric relief (30) is formed with an inner eccentric relief angle, $\beta$, of less than about 5 degrees, and wherein the outer eccentric relief (32) is formed with an outer eccentric relief angle, $\beta$, of between about 5 degrees and about 15 degrees.

3.  The rotary cutting tool (10) according to Claim 1 or 2, wherein the inner eccentric relief (30) is formed with a width, WI, and the outer eccentric relief (32) is formed with a width, WO, and wherein the width, WO, of the outer eccentric relief (32) is at least twice the width, WI, of the inner eccentric relief (30).

4.  The rotary cutting tool (10) according to Claim 3, wherein the width, WO, of the outer eccentric relief (32) is about four times the width, WI, of the inner eccentric relief (30).

5.  The rotary cutting tool (10) according to any of the preceding claims, wherein the inner eccentric relief (30) is formed with a surface finish of less than 0.15 microns Ra.

6.  The rotary cutting tool (10) according to any of the preceding claims, wherein the rotary cutting tool (10) comprises a solid end mill.

7.  The rotary cutting tool (10) according to any of the preceding claims, wherein each blade (18) forms a helix angle, HA, between about 25 degrees and about 50 degrees with respect to a central, longitudinal axis, A.

8.  A rotary cutting tool (10), comprising:

    a shank portion (12); and
    a cutting portion (14) extending from the shank portion (12) to a cutting tip (16), the cutting portion (14) having a plurality of blades (18) separated by flutes (20), each of the blades (18) including a relief surface (22) and a radial cutting edge (24) formed at an intersection between a respective flute (20) and the relief surface (22),
    wherein the relief surface (22) comprises an inner eccentric relief (30) immediately adjacent the radial cutting edge (24) and an outer eccentric relief (32) immediately adjacent the inner eccentric relief (30),
    wherein the inner eccentric relief (30) is formed with an inner eccentric relief angle, $\beta$, of less than about 5 degrees, and wherein the outer eccentric relief (32) is formed with an outer eccentric relief angle, $\beta$, of between about 5 degrees and about 15 degrees, and
    wherein the inner eccentric relief (30) is formed with a surface finish of less than 0.15 microns Ra.

9.  The rotary cutting tool (10) according to Claim 8, wherein the inner eccentric relief (30) is formed with a width, WI, and the outer eccentric relief (32) is formed with a width, WO, and wherein the width, WO, of the outer eccentric relief (32) is at least twice the width, WI, of the inner eccentric relief (30).

10. The rotary cutting tool (10) according to Claim 9, wherein the width, WO, of the outer eccentric relief (32) is about four times the width, WI, of the inner eccentric relief (30).

11. The rotary cutting tool (10) according to any of Claims 8 to 10,
    wherein the rotary cutting tool (10) comprises a solid end mill.

12. The rotary cutting tool (10) according to any of Claims 8 to 11,
    wherein each blade (18) forms a helix angle, HA, between about 25 degrees and about 50 degrees with respect to a central, longitudinal axis, A.

13. A method of making a rotary cutting tool (10), in particular a rotary cutting tool according to any of the preceding claims, comprising a shank portion (12) and a cutting portion (14), the cutting portion (14) having a plurality of blades (18) separated by flutes (20), each of the blades (18) including a relief surface (22) and a radial cutting edge (24) formed at an intersection between a respective flute (20) and the relief surface (22), the relief surface (22) comprising an inner eccentric relief (30) immediately adjacent the radial cutting edge (24) and an outer eccentric relief (32) immediately adjacent the inner eccentric relief (30), the method comprising:

    grinding a cylindrical blank to form a flute (20) and a radial cutting edge (24) by using a grinding wheel;
    grinding an outer relief surface (32) behind and adjacent the radial cutting edge (24) having an outer eccentric relief angle, $\beta$, of between about 5 degrees and about 15 degrees by using a grinding wheel; and
    grinding and polishing a portion of the outer eccentric relief surface (32) immediately adjacent the radial cutting edge (24) to form an inner relief surface (30) having an inner eccentric relief angle, $\beta$, of less than about 5 degrees by using a fine grit grinding wheel.

FIG. 1

EP 4 552 775 A1

FIG. 2

FIG. 3

FIG. 4

Europäisches
Patentamt

European
Patent Office

Office européen
des brevets

# EUROPEAN SEARCH REPORT

Application Number

EP 24 20 7130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 093 003 A1 (FRAISA HOLDING AG [CH]) 26 August 2009 (2009-08-26) * paragraph [0060] - paragraph [0072] * * figures 1a,2 * | 1-13 | INV. B23C5/10 |
| X | EP 2 983 852 B1 (MAPAL FABRIK FUER PRAEZ DR KRESS KG [DE]) 22 September 2021 (2021-09-22) * paragraph [0027] - paragraph [0064] * | 1-13 | |
| X | CN 110 153 480 A (JIANGSU K BETTER TECH CO LTD) 23 August 2019 (2019-08-23) * the whole document * | 1-13 | |

TECHNICAL FIELDS
SEARCHED        (IPC)

B23C

The present search report has been drawn up for all claims

| Place of search | Date of completion of the search | Examiner |
|---|---|---|
| Munich | 1 April 2025 | Schulz, Andreas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 7130

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2025

| Patent document cited in search report | | Publication date | Patent family member(s) | | Publication date |
|---|---|---|---|---|---|
| EP 2093003 | A1 | 26-08-2009 | NONE | | |
| EP 2983852 | B1 | 22-09-2021 | DE 102013206249 | A1 | 23-10-2014 |
| | | | DE 202014002031 | U1 | 01-04-2014 |
| | | | EP 2983852 | A1 | 17-02-2016 |
| | | | ES 2896942 | T3 | 28-02-2022 |
| | | | PL 2983852 | T3 | 07-02-2022 |
| | | | WO 2014166731 | A1 | 16-10-2014 |
| CN 110153480 | A | 23-08-2019 | NONE | | |

EPO FORM P0459

For more details about this annex : see Official Journal of the European Patent Office, No. 12/82